# EUROPÄISCHE PATENTSCHRIFT

(11) **EP 2 132 049 B1**
(45) Veröffentlichungstag und Bekanntmachung des Hinweises auf die Patenterteilung: **07.07.2010**
(21) Anmeldenummer: 08701338.9
(22) Anmeldetag: 09.01.2008
(51) Int. Cl.: B60C 23/04

(54) **REIFENSENSORMODUL**
TIRE SENSOR MODULE
MODULE DE DÉTECTEUR POUR PNEUMATIQUE

(30) Priorität: 05.03.2007 DE 102007010505
(43) Veröffentlichungstag der Anmeldung: 16.12.2009
(73) Patentinhaber: Robert Bosch GmbH, 70442 Stuttgart (DE)
(72) Erfinder: BOES, Thomas-Achim, 72827 Wannweil (DE)
(86) Internationale Anmeldenummer: PCT/EP2008/050173
(87) Internationale Veröffentlichungsnummer: WO 2008/107213

(56) Entgegenhaltungen:
- EP-A- 1 623 849
- DE-A1-102004 006 295
- US-A- 5 285 189
- US-A1- 2005 229 691

## Beschreibung

### Stand der Technik

Die Erfindung betrifft ein Reifensensormodul zum Einsatz in einem Fahrzeugreifen sowie ein Verfahren zum Ermitteln von Zustandsgrößen eines Fahrzeugreifens.

Reifensensoren dienen zur Messung unterschiedlicher Zustandsgrößen, insbesondere des Drucks und der Temperatur, zum Teil auch der Beschleunigungen des Fahrzeugreifens. Da sie nicht an externe Spannungsquellen angeschlossen werden können, sind verschiedene Systeme zur Energieversorgung und zum Reduzieren des Stromverbrauchs bekannt.

Die Energieversorgung kann zum einen durch eine eingebaute Batterie erfolgen, die jedoch eine begrenzte Lebensdauer aufweist und somit die Lebensdauer des gesamten Reifensensors begrenzt. Zur Verringerung des Stromverbrauchs wird zum Teil eine Rollerkennung in die Radelektroniken eingebaut, bei der durch Abschalten von Teilen des Auswerte-ASICs ein Stromverbrauch reduziert wird, um die Lebensdauer der Batterie zu verlängern. Weiterhin wird bei einigen Systemen bei Nichtbewegung des Rades, z. B. des Reserverades, ein Schlafmodus der Elektronik eingeschaltet, der unnötiges Senden im Ruhemodus verhindert.

Zur Realisierung dieser Funktion kann der mechanische Schalter, ein Beschleunigungssensor oder ein piezoelektrisches Bauelement verwendet werden, durch das bzw. den der Übergang vom Schlafmodus in den Betriebsmodus erkannt werden soll. Dieses Bauelement wird regelmäßig von einem Teil des Auswerte-ASICs, der ununterbrochen mit Strom versorgt wird, detetektiert und ausgewertet. Das Auswerte-ASIC muss somit kontinuierlich von einer Batterie als Spannungsversorgung gespeist werden, wozu ein konstanter Ruhestrom im ASIC fließt, auch wenn keine Abfrage erfolgt. Dieser Ruhestrom sowie der zusätzliche Strom zum Abfragen der Rollerkennung führen zu hohen Stromverbräuchen und damit zu einer Reduktion der Systemlebensdauer.

Weiterhin sind Reifensensor-Systeme bekannt, bei denen ein piezoelektrisches Bauelement als elektromechanischer Energiewandler zur Spannungsversorung dient, so dass die Verwendung einer Batterie als lebensbegrenzendes Bauelement nicht erforderlich ist. Derartige Sensorsysteme erzeugen somit lediglich Energie, wenn das Rad in Bewegung ist; dementsprechend wird ein großes piezoelektrisches Bauelement benötigt, um die für das Auswerte-ASIC, den Betrieb des Sensors sowie der Antenne erforderliche Energie zu erzeugen.

Ein derartiges groß dimensioniertes piezoelektrisches Bauelement ist kostspielig in der Herstellung und erfordert weiterhin einen größeren Einbauraum im Fahrzeugreifen; letztlich kann eine hinreichende Energieerzeugung nur im Bereich der Lauffläche erreicht werden, in der die mechanische Verformungen hinreichend groß sind.

Darüber hinaus ist aus der US 5,285,189 A ein autarker Reifensensor bekannt, der im Fahrzeugreifen selbst angeordnet ist und den Druck des Reifens erfasst. Zur Übermittlung der erfassten Reifendruckdaten ist dabei eine Funkverbindung vorgesehen. Weiterhin ist eine Vorrichtung zur Erkennung einer Zentrifugalbewegung vorgesehen, die die Stromversorgung sowohl mit dem Sensor als auch mit der Funkverbindung verbindet.

Aus der US 2005/0229691 A1 ist ein weiterer Reifendrucksensor bekannt, der einen piezoelektrischen Sensor zur Erfassung von Vibrationen zur Erkennung einer Reifenbewegung enthält. Diese Erkennung wird beispielsweise dazu genutzt, eine höhere Samplingrate der Druckerfassung bei einer Bewegung des Reifens zu steuern.

Aus der DE 10 2004 006 295 A1 ist eine Sensorvorrichtung zur Erfassung eines Reifendrucks bekannt, bei der eine wiederaufladbare elektrische Energiequelle zur Versorgung des Sensors, einer Steuereinrichtung sowie eines Senders vorgesehen ist. Aus der EP 1 623 849 A2 ist eine Vorrichtung bekannt, mit dessen Hilfe elektrische Energie aus einem sich rotierenden Reifen gewinnen lässt. Hierzu wird eine piezoelektrische Struktur verwendet, die direkt im Reifen angordnet ist und bei der Bewegung des Reifens über den Boden eine elektrische Ladung erzeugt. Diese elektrische Ladung wird in einem Energiespeicher, z.B. einem Kondensator gespeichert. Eine separate Schalteinrichtung ermöglicht, die so erzeugte Energie an andere elektronische Systeme abzugeben, beispielsweise an einen Reifendrucksensor mit drahtloser Signalübertragung.

### Offenbarung der Erfindung

Der Erfindung liegt der Gedanke zu Grunde, die Energieversorgung der Steuereinrichtung bzw. des Auswerte-ASICs grundsätzlich durch eine Batterie bzw. einen sich verbrauchenden Energiespeicher vorzunehmen, jedoch die Energieversorgung durch einen zusätzlichen elektromechanischen Energiewandler zu schließen bzw. zu öffnen. Hierzu sind erfindungsgemäß zusätzlich zu der Steuereinrichtung bzw. dem Auswerte-ASIC, der Sensoreinrichtung und ggf. weiteren Bauelementen wie HF-Chip bzw. Kristall-Oszillator und Antenne erfindungsgemäß sowohl die Batterie als auch der elektromechanische Energiewandler an eine Schaltereinrichtung angeschlossen, die vorteilhafterweise als Schalter-ASIC ausgebildet sind. Das Schalter-ASIC unterbricht und schließt die Energieversorgung des Auswerte-ASICs durch die Batterie in Abhängigkeit des Ausgangssignals des elektromechanischen Energiewandlers bzw. piezoelektrischen Bauelementes.

Im Falle der Bewegung des Rades wird im elektromechanischen Energiewandler Energie erzeugt, die als Steuersignal bzw. Schaltsignal an das Schalter-ASIC ausgegeben wird und hierdurch die Stromversorgung zwischen der Batterie und dem Auswerte-ASIC schließt.

Im Falle eines Reifenstillstandes wird keine Energie in dem elektromechanischen Energiewandler erzeugt, so dass das Auswerte-ASIC vollständig von der Batterie getrennt ist.

Erfindungsgemäß ist somit eine vollständige Abkopplung bzw. Trennung der Steuereinrichtung bzw. des Auswerte-ASIC und der weiteren elektronischen Bauelemente von der Batterie möglich. Somit kann bei Reifenstillstand Energie gespart werden. Erfindungsgemäß kann hierbei eine vollständige Entkopplung durch das Schalter-ASIC erreicht werden, die zu einer deutlich besseren Reduzierung des Energieverbrauchs führt als bei herkömmlichen Sleep-Modus-Einstellungen mit einem verbleibenden Ruhestrom bzw. Leckstrom. Die Batterielebensdauer und somit auch die Systemlebensdauer kann durch die Energieeinsparung gegenüber herkömmlichen, Batterie-gespeisten Sensormodulen deutlich verlängert werden. Somit wird ein energetisch autarkes, langlebiges Sensormodul geschaffen. Das Schalter-ASIC wird durch die (Piezo-)Spannung des elektromechanischen Energiewandlers geschlossen und ist im Ruhezustand geöffnet; es belastet die Batterie somit ebenfalls nicht.

Erfindungsgemäß steht bei einer Bewegung des Rades dennoch eine vollwertige Batterie mit hoher Kapazität und gleichmäßiger Versorgungsspannung zum Betrieb des Auswerte-ASIC sowie der weiteren elektronischen Bauelemente zur Verfügung, wodurch sich gegenüber herkömmlichen durch elektromechanische Energiewandlung versorgten Systeme deutliche Vorteile ergeben, insbesondere bezüglich Zuverlässigkeit, Genauigkeit der Messung und Signalstärke.

Gegenüber diesen herkömmlichen Systemen mit elektromechanischen E-nergiewandlern kann erfindungsgemäß ein kleiner dimensionierter elektromechanischer Energiewandler ausgebildet werden, da lediglich das Schalter-ASIC (die Schaltereinrichtung) anzusteuern ist. Hierdurch ergeben sich weitere Kostenvorteile, wobei auch ein Einsatz außerhalb der Lauffläche, z. B. im Ventilbereich des Reifens, möglich ist, da keine relevanteren Betriebsströme erforderlich sind.

Gegenüber herkömmlichen batteriebetriebenen Systemen kann eine kleinere Batterie bzw. Batterie mit kleinerer Kapazität verwendet werden, wodurch die Kosten und die Baugröße reduziert werden können.

### Kurze Beschreibung der Zeichnungen

Es zeigen:

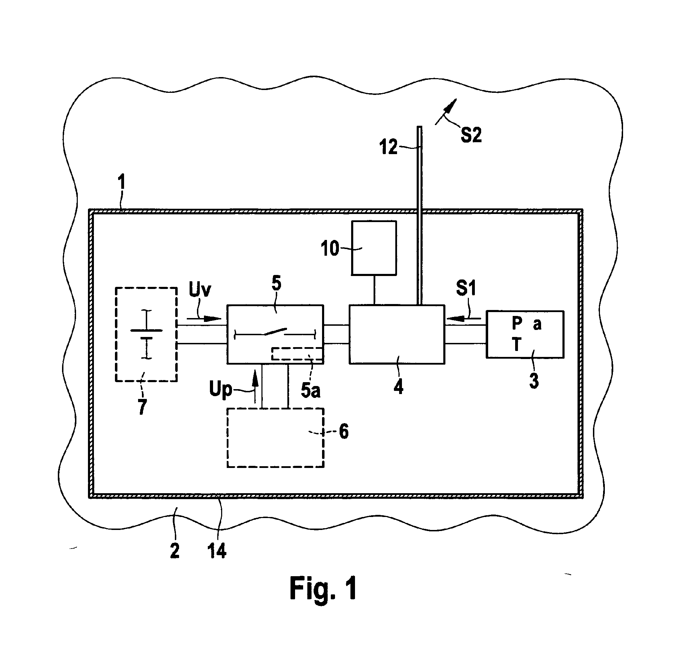

- Fig. 1: ein Blockschaltbild;
- Fig. 2: ein Flussdiagramm eines erfindungsgemäßen Verfahrens.

Ein Reifensensormodul 1 ist in einem Fahrzeugreifen 2, z. B. in dem Ventilbereich oder auch in der Lauffläche des Fahrzeugreifens 2, angeordnet. Das Reifensensormodul 1 weist eine Sensoreinrichtung 3 auf, die vorteilhafterweise als Druck-Temperatur-Sensor zur Messung sowohl des Druckes P als auch der Temperatur T ausgebildet ist, ein Auswerte-ASIC 4 als Auswerte- und Steuereinrichtung, ein Schalter-ASIC 5 als erfindungsgemäße Schaltereinrichtung, ein piezoelektrisches Bauelement 6 sowie eine Batterie 7 und einen Kristall-Oszillator 10 auf. Der Druck-Temperatur-Sensor 3 nimmt in bekannter Weise Messwerte des Druckes P und der Temperatur T auf und gibt entsprechende Messsignale S1 an das Auswerte-ASIC 4 aus, d. h. er wird vom Auswerte-ASIC 4 ausgelesen. Neben dem Druck P und der Temperatur T können auch Messungen der Beschleunigungen a, d.h. auch von Vibrationen erfolgen.

Das Auswerte-ASIC 4 ist mit dem Kristall-Oszillator 10 zur Erzeugung der HF- Sendefrequenz verbunden; somit wertet das Auswerte-ASIC 4 die Messsignale von P und T aus und gibt HF-Signale S2 über eine angeschlossene Antenne 12 an eine fahrzeugseitige Empfangseinrichtung aus. Die Antenne 12 kann z. B. an der Innenseite und/oder Außenseite des Gehäuses 14 des Reifensensormoduls 1 ausgebildet sein.

Erfindungsgemäß ist eine Batterie 7 als Stromversorgung des Auswerte-ASICs 4 und weiterhin auch der Sensoreinrichtung 3, des Kristall-Oszillators 10 sowie der Antenne 12 vorgesehen. Die Batterie 7 kann insbesondere ein nicht wiederaufladbares galvanisches Element sein und gibt eine Gleichspannung Uv als Versorgungsspannung aus. Das Schalter-ASIC 5 ist zwischen das Auswerte-ASIC 4 und die Batterie 7 geschaltet und erhält seine Energie von dem piezoelektrischen Bauelement 6. Das Schalter-ASIC 5 hat hierbei die Funktion eines Schalters, der die Batteriespannung Uv vom Auswerte-ASIC 4 trennt.

Das piezoelektrische Bauelement 6 kann z. B. in an sich bekannter Weise durch ein mehrlagiges System mit einer oder mehreren Lagen aus Piezo-Keramiken gebildet sein, wobei der mehrschichtige Stapel bei mechanischer Verformung und/oder Bewegung unterschiedliche Biegestellungen einnimmt und hierdurch eine sich zeitlich ändernde Piezospannung Up ausgibt. Das piezoelektrische Bauelement 6 erzeugt somit bei einer Rollbewegung des Fahrzeugreifens 1 aufgrund der Verformung der Lauffläche 2 oder aufgrund der Bewegung die elektrische Piezospannung Up, die erfindungsgemäß als Schaltsignal das Schalter-ASIC 5 verstellt. Das piezoelektrische Bauelement 6 dient somit sowohl für die Energieversorgung als auch als Signalquelle für das Schalter-ASIC 5. Die Batterie 7 ist bei geöffneter Schalterfunktion des Schalter-ASICs 5 somit nicht belastet, da sie weder das Auswerte-ASIC 4 noch das Schalter-ASIC 5 mit Energie versorgt.

Im Falle der Bewegung des Fahrzeugrades wird im piezoelektrischen Bauelement 6 eine Energie erzeugt aufgrund der Deformation der Lauffläche 2 oder auch z. B. durch Trägheit des piezoeelektrischen Baueelementes oder einer aufgebrachten seismischen Masse, und die erzeugte Piezospannung Up ausgegeben, die das Schalter-ASIC 5 schließt. Das Auswerte-ASIC 4 liegt somit vollständig an der Batteriespannung Uv. Im Falle des Radstillstandes wird keine Energie in dem piezoelektrischen Bauelement 6 erzeugt, so dass das Schalter-ASIC 5 öffnet und das Auswerte-ASIC 4 von der Batterie 7 trennt.

Erfindungsgemäß kann gemäß einer Ausführungsform im Schalter-ASIC 5 eine Verzögerung für die Schalterfunktion vorgesehen sein, so dass bei einem kurzzeitigen Stillstand des Fahrzeugrades, z. B. im stop-und-go-Verkehr oder an einem Verkehrsschild oder einer Ampel die Batterie 7 das Auswerte-ASIC 4 noch für einen kurzen Zeitraum versorgt und somit weiterhin ein Messbetrieb und Datenübertragung über die Energieversorgung der Batterie 7 möglich ist. Hierzu kann das Schalter-ASIC 5 einen Energie-Zwischenspeicher 5a aufweisen, z. B. als Kondensator mit geeignet großen Kondensatorflächen, um hierdurch die Schalterfunktion des Öffnens zu verzögern. Es ist somit grundsätzlich auch ein intelligentes Schalter-ASIC 5 einsetzbar. Erfindungsgemäß wird allerdings erkannt, dass eine derartige Verzögerung grundsätzlich nicht erforderlich ist, da während des Stillstandes nicht mit einer relevanten Änderung der Messdaten zu rechnen ist bzw. die Änderungen bei nachfolgender Raddrehung rechtzeitig festgestellt werden können.

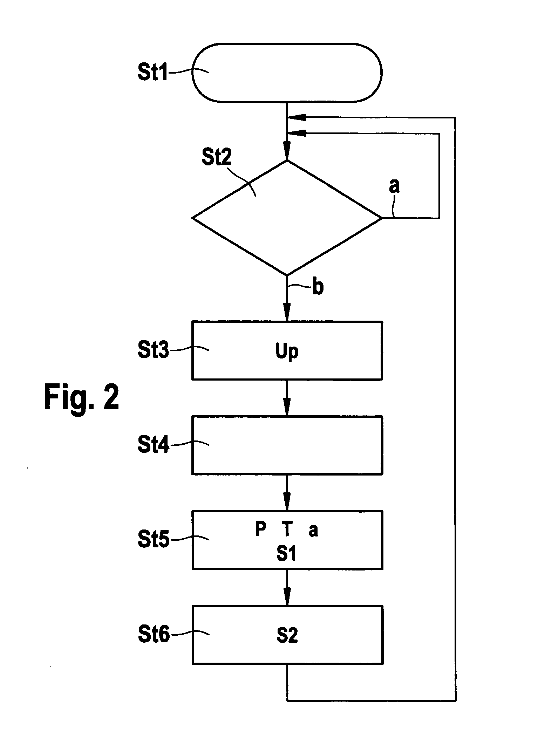

Figur 2 zeigt ein Flussdiagramm mit einer möglichen Ausführungsform des erfindungsgemäßen Verfahrens. In Schritt St1 wird das Verfahren gestartet; dies kann bereits bei Montage des Fahrzeugreifens erfolgen, da das erfindungsgemäße Reifensensormodul 1 autark ist und nicht vom Fahrzeug aus aktiviert wird. Nachfolgend erfolgt der Betrieb in der gezeigten Schleife, bei der im Schritt St2 gemäß Zweig a das Verfahren zurückgesetzt wird, wenn das piezoelektrische Bauelement 6 keine Bewegung des Fahrzeugreifens 2 feststellt; es findet somit kein aktiver Mess- und Sendebetrieb statt. Falls gemäß Verzweigung b das piezoelektrische Bauelement eine Bewegung des Fahrzeugreifens feststellt, gibt es in Schritt St3 die Piezospannung Up bzw. eine entsprechend gleichgerichtete Schaltspannung an das Schalter-ASIC aus, woraufhin in Schritt St4 das Schalter-ASIC 5 geschlossen wird und hierdurch das Auswerte-ASIC 4, der Kristall-Oszillator 10, die Sensoreinrichtung 3 sowie die Antenne 12 bestromt werden. Somit beginnt der Mess- und Sendebetrieb, bei dem gemäß Schritt St5 die Sensoreinrichtung 3 die Zustandsgrößen P, T und gegebenenfalls auch a misst und Messsignale S1 an das Auswerte-ASIC 4 ausgibt, das gemäß Schritt St6 mit Hilfe des Kristall-Oszillators 10 HF-Signale erzeugt und als Sendesignale S2 über die Antenne 12 ausgibt.

Dieser Sende- und Messbetrieb erfolgt gemäß der gezeigten Schleife, solange in Schritt St2 das piezoelektrische Bauelement 6 das Schalter-ASIC 5 geschlossen hält.

## Patentansprüche

1. Reifensensormodul zum Einsatz in einem Fahrzeugreifen, das mindestens aufweist:
eine Sensoreinrichtung (3) zur Messung mindestens einer Messgröße (P, T, a) und Ausgabe mindestens eines Messsignals (S1),
eine Steuereinrichtung (4) zur Aufnahme des Messsignals (S1) und Ausgabe mindestens eines Sendesignals (S2) an eine drahtlose Schnittstelle (12) zum Aussenden des Sendesignals (S2) an eine Empfangseinrichtung im oder am Fahrzeug, und
einen Energiespeicher (7) zur Energieversorgung zumindest der Steuereinrichtung (4), **dadurch gekennzeichnet, dass**
zwischen dem Energiespeicher (7) und der Steuereinrichtung (4) eine Schaltereinrichtung (5) vorgesehen ist, die in Abhängigkeit eines Steuersignals (Up) die Energieversorgung der Steuereinrichtung (4) durch den Energiespeicher (7) unterbricht oder schließt, und
ein elektromechanischer Energiewandler (6) vorgesehen ist, der bei Einwirken einer Verformung, Bewegung und/oder Druckänderung das Steuersignal (Up) an die Schaltereinrichtung (5) zum Schließen der Energieversorgung ausgibt.

2. Reifensensormodul nach Anspruch 1, **dadurch gekennzeichnet, dass** der Energiespeicher eine Batterie (7), vorzugsweise eine nicht wiederaufladbare galvanische Zelle ist.

3. Reifensensormodul nach Anspruch 1 oder 2, **dadurch gekennzeichnet, dass** der elektromechanische Energiewandler ein piezoelektrisches Bauelement (6) aufweist, das bei Einwirken einer Verformung, Bewegung oder Druckänderung eine Piezospannung (Up) oder ein aus der Piezospannung erzeugtes Signal als Steuersignal an die Schaltereinrichtung (5) ausgibt.

4. Reifensensormodul nach Anspruch 3, **dadurch gekennzeichnet, dass** der elektromechanische Energiewandler (6) oder die Schaltereinrichtung (5) eine Gleichrichterschaltung zur Gleichrichtung der erzeugten Piezospannung (Up) aufweist.

5. Reifensensormodul nach einem der vorherigen Ansprüche, **dadurch gekennzeichnet, dass** die Schaltereinrichtung (5) ein Schalter-ASIC (5), z. B. mit einem oder mehreren als Schalter dienenden MOSFETs, ist.

6. Reifensensormodul nach einem der vorherigen Ansprüche, **dadurch gekennzeichnet, dass** die Steuereinrichtung (4) das aufgenommene Messsignal (S1) auswertet, hieraus ein HF-Signal bildet und das HF-Signal als das Sendesignal (S2) über die drahtlose Schnittstelle (12) aussendet.

7. Reifensensormodul nach dem Anspruch 6, **dadurch gekennzeichnet, dass** mit der Steuereinrichtung (4) ein Kristall-Oszillator (10) zur Erzeugung des HF-Signals (S2) verbunden ist.

8. Reifensensormodul nach einem der vorherigen Ansprüche, **dadurch gekennzeichnet, dass** als drahtlose Schnittstelle (12) eine Antenne (12) im oder am Gehäuse (14) des Reifensensormoduls (1) ausgebildet ist.

9. Reifensensormodul nach einem der vorherigen Ansprüche, **dadurch gekennzeichnet, dass** die Steuereinrichtung (4) ein Auswerte-ASIC (4) ist.

10. Reifensensormodul nach einem der vorherigen Ansprüche, **dadurch gekennzeichnet, dass** es an einem Reifenventil und/oder in der Lauffläche des Fahrzeugreifens (2) anbringbar ist.

11. Reifensensormodul nach einem der vorherigen Ansprüche, **dadurch gekennzeichnet, dass** es energetisch autark ist.

12. Reifensensormodul nach einem der vorherigen Ansprüche, **dadurch gekennzeichnet, dass** die Schaltereinrichtung (5) nach Ausbleiben des Steuersignals (Up) die Energieversorgung noch über einen vorgegebenen Zeitraum aufrechterhält.

13. Reifensensormodul nach Anspruch 12, **dadurch gekennzeichnet, dass** ein Energie-Zwischenspeicher (5a) zur Zwischenspeicherung des von dem elektromechanischen Energiewandler (6) ausgegebenen Steuersignals (Up) vorgesehen ist.

14. Verfahren zum Ermitteln von Zustandsgrößen eines Fahrzeugreifens (2), bei dem
während der Fahrt eine Steuereinrichtung (4) mit Energie versorgt wird, die mindestens ein Messsignal (S1) aufnimmt, das eine Zustandsgröße des Fahrzeugreifens (P, T, a) wiedergibt, und aus dem Messsignal (S1) ein drahtloses Sendesignal (S2) bildet und über eine drahtlose Schnittstelle (12) ausgibt,
wobei die Energieversorgung der Steuereinrichtung (4) durch eine Schaltereinrichtung (5) geschaltet wird,
wobei die Energieversorgung während der Fahrt bei Einwirken einer äußeren Verformung, Bewegung und/oder eines äußeren Drucks auf das Reifensensormodul (1) geschlossen wird und bei einem Reifenstillstand unterbrochen wird,
**dadurch gekennzeichnet dass**
ein piezoelektrisches Bauelement (6) aufgrund der Verformung und/oder Bewegung ein Signal erzeugt, welches zugleich die Energieversorgung der Schalteinrichtung (5) zur Schaltung der Energieversorgung der Schalteinrichtung (4) liefert als auch die Schaltung der Schaltereinrichtung (5) übernimmt.

## Claims

1. Tyre sensor module for use in a vehicle tyre, which module has at least:
a sensor device (3) for measuring at least one measurement variable (P, T, a) and outputting at least one measurement signal (81),
a control device (4) for receiving the measurement signal (81) and outputting at least one transmission signal (S2) to a wireless interface (12) for emitting the transmission signal (S2) to a receiving device in or on the vehicle, and
an energy store (7) for supplying energy to at least the control device (4),
**characterized in that**
a switch device (5), which interrupts or stops the energy supplied to the control device (4) by the energy store (7) on the basis of a control signal (Up), is provided between the energy store (7) and the control device (4), and
provision is made of an electromechanical energy transducer (6) which outputs the control signal (Up) to the switch device (5) for the purpose of stopping the energy supply upon the action of a deformation, movement and/or pressure change.

2. Tyre sensor module according to Claim 1, **characterized in that** the energy store is a battery (7), preferably a galvanic cell which cannot be recharged.

3. Tyre sensor module according to Claim 1 or 2, **characterized in that** the electromechanical energy transducer has a piezoelectric component (6) which outputs a piezoelectric voltage (Up) or a signal generated from the piezoelectric voltage to the switch device (5) as a control signal upon the action of a deformation, movement or pressure change.

4. Tyre sensor module according to Claim 3, **characterized in that** the electromechanical energy transducer (6) or the switch device (5) has a rectifier circuit for rectifying the piezoelectric voltage (Up) generated.

5. Tyre sensor module according to one of the preceding claims, **characterized in that** the switch device (5) is a switch ASIC (5), for example with one or more MOSFETs which are used as switches.

6. Tyre sensor module according to one of the preceding claims, **characterized in that** the control device (4) evaluates the received measurement signal (S1), uses the latter to form an RF signal and emits the RF signal as the transmission signal (S2) via the wireless interface (12).

7. Tyre sensor module according to Claim 6, **characterized in that** a crystal oscillator (10) for generating the RF signal (S2) is connected to the control device (4).

8. Tyre sensor module according to one of the preceding claims, **characterized in that** an antenna (12) is formed in or on the housing (14) of the tyre sensor module (1) as a wireless interface (12).

9. Tyre sensor module according to one of the preceding claims, **characterized in that** the control device (4) is an evaluation ASIC (4).

10. Tyre sensor module according to one of the preceding claims, **characterized in that** said module can be fitted to a tyre valve and/or in the tread of the vehicle tyre (2).

11. Tyre sensor module according to one of the preceding claims, **characterized in that** said module has its own autonomous energy supply.

12. Tyre sensor module according to one of the preceding claims, **characterized in that** the switch device (5) still maintains the energy supply for a predefined period of time following the absence of the control signal (Up).

13. Tyre sensor module according to Claim 12, **characterized in that** an energy buffer (5a) for buffering the control signal (Up) output by the electromechanical energy transducer (6) is provided.

14. Method for determining state variables of a vehicle tyre (2), in which,
during travel, a control device (4) is supplied with energy, said control device receiving at least one measurement signal (S1) that represents a state variable of the vehicle tyre (P, T, a), forming a wireless transmission signal (S2) from the measurement signal (S1) and outputting said transmission signal via a wireless interface (12),
the energy supply for the control device (4) being switched by a switch device (5),
the energy supply being stopped during travel when an external deformation, movement and/or an external pressure acts on the tyre sensor module (1) and being interrupted if the tyre stops,
**characterized in that**
a piezoelectric component (6) generates a signal on the basis of the deformation and/or movement, which signal simultaneously provides the energy supply for the switching device (5) for switching the energy supply for the control device (4) and switches the switch device (5).

## Revendications

1. Module de détecteur de bandage de roue destiné à être utilisé dans un bandage de roue de véhicule et présentant au moins :
un dispositif de détection (3) qui mesure au moins une grandeur de mesure (P, T, a) et qui délivre au moins un signal de mesure (S1),
un dispositif de commande (4) qui reçoit le signal de mesure (S1) et qui émet au moins un signal d'émission (S2) sur une interface sans fil (12) qui envoie le signal d'émission (S2) à un dispositif de réception situé sur ou dans le véhicule et
un accumulateur d'énergie (7) qui alimente au moins le dispositif de commande (4) en énergie, **caractérisé en ce que**
un dispositif de commutation (5) qui, en fonction d'un signal de commande (Up), interrompt ou branche l'alimentation en énergie du dispositif de commande (4) par la réserve d'énergie (7) est prévu entre l'accumulateur d'énergie (7) et le dispositif de commande (4) et
**en ce qu'**il présente un convertisseur électromécanique d'énergie (6) qui délivre le signal (Up) au dispositif de commutation (5) en cas d'action d'une déformation, d'un déplacement et/ou d'une modification de pression, pour qu'il branche l'alimentation en énergie.

2. Module de détecteur de bandage de roue selon la revendication 1, **caractérisé en ce que** l'accumulateur d'énergie est une batterie (7) et de préférence une cellule galvanique non rechargeable.

3. Module de détecteur de bandage de roue selon les revendications 1 ou 2, **caractérisé en ce que** le convertisseur électromécanique d'énergie présente un composant piézoélectrique (6) qui, en cas d'intervention d'une déformation, d'un déplacement ou d'une modification de pression, délivre au dispositif de commutation (5) une tension piézoélectrique (Up) ou un signal produit à partir de la tension piézoélectrique comme signal de commande.

4. Module de détecteur de bandage de roue selon la revendication 3, **caractérisé en ce que** le convertisseur électromécanique d'énergie (6) ou le dispositif de commutation (5) présentent un circuit redresseur qui redresse la tension piézoélectrique (Up) produite.

5. Module de détecteur de bandage de roue selon l'une des revendications précédentes, **caractérisé en ce que** le dispositif de commutation (5) est un commutateur ASIC (5), par exemple doté d'un ou plusieurs MOSFETs servant de commutateurs.

6. Module de détecteur de bandage de roue selon l'une des revendications précédentes, **caractérisé en ce que** le dispositif de commande (4) évalue le signal de mesure (S1) reçu, forme à partir de là un signal HF et émet le signal HF comme signal d'émission (S2) par l'interface sans fil (12).

7. Module de détecteur de bandage de roue selon la revendication 6, **caractérisé en ce qu'**un oscillateur à cristal (10) qui forme le signal HF (S2) est relié au dispositif de commande (4).

8. Module de détecteur de bandage de roue selon l'une des revendications précédentes, **caractérisé en ce qu'**une antenne (12) est formée comme interface sans fil (12) dans ou sur le boîtier (14) du module (1) de détecteur de bandage de roue.

9. Module de détecteur de bandage de roue selon l'une des revendications précédentes, **caractérisé en ce que** le dispositif de commande (4) est un ASIC (4) d'évaluation.

10. Module de détecteur de bandage de roue selon l'une des revendications précédentes, **caractérisé en ce qu'**il peut être placé sur la soupape d'un bandage de roue et/ou dans la surface de roulement du bandage (2) pour roue de véhicule.

11. Module de détecteur de bandage de roue selon l'une des revendications précédentes, **caractérisé en ce qu'**il est énergétiquement autonome.

12. Module de détecteur de bandage de roue selon l'une des revendications précédentes, **caractérisé en ce que** le dispositif de commutation (5) maintient encore l'alimentation en énergie pendant un intervalle de temps prédéterminé après la disparition du signal de commande (Up).

13. Module de détecteur de bandage de roue selon la revendication 12, **caractérisé en ce qu'**il présente un accumulateur intermédiaire d'énergie (5a) qui accumule temporairement le signal de commande (Up) délivré par le convertisseur électromécanique d'énergie (6).

14. Procédé de détermination de grandeurs d'état d'un bandage (2) pour roue de véhicule, dans lequel:
pendant le roulage, un dispositif de commande (4) est alimenté en énergie et reçoit au moins un signal de mesure (S1) qui reflète une grandeur d'état du bandage (P, T, a) de roue de véhicule, forme à partir du signal de mesure (S1) un signal d'émission sans fil (S2) et le délivre par une interface sans fil (12),
l'alimentation en énergie du dispositif de commande (4) est raccordée par un dispositif de commutation (5),
l'alimentation en énergie est branchée pendant le roulage si une déformation, un déplacement et/ou une pression extérieure sont exercées sur le module (1) de détecteur de bandage de roue et est interrompue lorsque le bandage de roue est à l'arrêt,
**caractérisé en ce que**
à partir de la déformation et/ou du déplacement, un composant piézoélectrique (6) délivre un signal qui fournit l'alimentation en énergie au dispositif de commutation (5) pour raccorder l'alimentation en énergie au dispositif de commande (4) et qui assure en même temps la commutation du dispositif de commutation (5).
